# EUROPEAN PATENT APPLICATION

(11) **EP 4 791 053 A1**
(43) Date of publication of application: **12.08.2026**
(21) Application number: 26156475.1
(22) Date of filing: 04.02.2026
(51) Int. Cl.: H04W 4/80, H04L 27/26

(54) **ELECTRONIC DEVICE FOR RECEIVING BLUETOOTH SIGNALS AND METHOD FOR RECEIVING THE SIGNALS**

(30) Priority: 06.02.2025 KR 20250015162
(71) Applicant: Samsung Electronics Co., Ltd., Suwon-si, Gyeonggi-do 16677 (KR)
(72) Inventor: KIM, Hyeonjun, 16677 Suwon-si (KR); LEE, Jung Woon, 16677 Suwon-si (KR)
(74) Representative: Marks & Clerk LLP

(57) **Abstract**

An electronic device includes an antenna that receives a receiving signal including samples, each having a value repeating every first number of samples, and a communication processor electrically connected to the antenna. The communication processor obtains a first cumulative correlation value by accumulating results of correlation operations between a first delay signal and the receiving signal, obtains a second cumulative correlation value by accumulating results of correlation operations between a second delay signal and the receiving signal, the second delay signal being obtained by delaying the receiving signal by a second delay time that is different from a first delay time of the first delay signal, and obtains data included in the receiving signal when an absolute value of the second cumulative correlation value is greater than or equal to a second threshold and an absolute value of the first cumulative correlation value is less than a first threshold.

## Description

### BACKGROUND

The present disclosure relates to an electronic device for receiving Bluetooth signals and a method for receiving the signals.

Currently, Bluetooth communication technology for short-range connections with peripheral devices is used in various electronic devices. Bluetooth communication technology may include Bluetooth legacy (or classic) communication technology or Bluetooth Low Energy (BLE) communication technology.

As the integration density of electronic devices such as smartphones has increased and ultra-high-speed, high-capacity wireless communication has become widespread, technologies for achieving high data transmission rates in short-range communication are being employed. Higher data throughput (HDT) Bluetooth communication, providing a relatively higher data transmission rate compared to legacy Bluetooth communication, is being widely employed.

### SUMMARY

It is an aspect to provide an electronic device for improving communication performance.

According to an aspect of one or more embodiments, there is provided an electronic device comprising an antenna configured to receive a receiving signal comprising a plurality of samples, each having a value repeating every first number of samples; and a communication processor that is electrically connected to the antenna and that is configured to obtain a first cumulative correlation value by accumulating results of correlation operations between a first delay signal and corresponding samples in the receiving signal, the first delay signal being obtained by delaying the receiving signal by a first delay time; obtain a second cumulative correlation value by accumulating results of correlation operations between a second delay signal and corresponding samples in the receiving signal, the second delay signal being obtained by delaying the receiving signal by a second delay time that is different from the first delay time; and obtain data included in the receiving signal when an absolute value of the second cumulative correlation value is greater than or equal to a second threshold and an absolute value of the first cumulative correlation value is less than a first threshold.

According to another aspect of one or more embodiments, there is provided a method comprising receiving a receiving signal comprising a plurality of samples through an antenna; obtaining, by a communication processor, a first cumulative correlation value by accumulating results of autocorrelation operations between a first delay signal and corresponding samples of the receiving signal, the first delay signal being obtained by delaying the receiving signal by a first delay time; obtaining, by the communication processor, a second cumulative correlation value by accumulating results of autocorrelation operations between a second delay signal and corresponding samples of the receiving signal, the second delay signal being obtained by delaying the receiving signal by a second delay time that is different from the first delay time; and obtaining, by the communication processor, data included in the receiving signal when an absolute value of the second cumulative correlation value is greater than or equal to a second threshold and when an absolute value of the first cumulative correlation value is less than a first threshold.

According to yet another aspect of one or more embodiments, there is provided a communication processor comprising a buffer circuit configured to output a first delay signal obtained by delaying a receiving signal, received through an antenna, by a first delay time and a second delay signal obtained by delaying the receiving signal by a second delay time greater than the first delay time; a first operation circuit configured to output an absolute value of a first cumulative correlation value obtained by accumulating results of correlation operations between corresponding samples in the first delay signal and the receiving signal; a second operation circuit configured to output an absolute value of a second cumulative correlation value obtained by accumulating results of correlation operations between corresponding samples in the second delay signal and the receiving signal; and a data circuit configured to obtain data included in the receiving signal when the absolute value of the second cumulative correlation value is greater than or equal to a second threshold and when the absolute value of the first cumulative correlation value is less than a first threshold.

The described second delay signal may correspond to a length of the first number of samples in the receiving signal.

At least some of the above and other features of the disclosure are set out in the claims.

### BRIEF DESCRIPTION OF DRAWINGS

FIG. 1 is a block diagram illustrating an electronic device according to one or more embodiments.
FIG. 2 is a diagram illustrating a configuration, in which a communication processor calculates a first cumulative correlation value, according to one or more embodiments.
FIG. 3 is a diagram illustrating a configuration in which a communication processor compares an absolute value of the first cumulative correlation value with a first threshold, according to one or more embodiments.
FIG. 4 is a diagram illustrating a configuration in which a communication processor calculates a second cumulative correlation value, according to one or more embodiments.
FIG. 5 is a diagram illustrating a configuration in which a communication processor compares an absolute value of the second cumulative correlation value with a second threshold, according to one or more embodiments.
FIG. 6 is a diagram illustrating a starting point of a packet including data in a received signal according to one or more embodiments.
FIG. 7 is a block diagram illustrating a configuration of an electronic device according to one or more embodiments.
FIG. 8 is a block diagram illustrating a more detailed configuration of a communication processor in the electronic device of FIG. 7, according to one or more embodiments.
FIG. 9 is a flowchart illustrating a method of receiving a signal in an electronic device according to one or more embodiments.
FIG. 10 is a flowchart illustrating a method of calculating a first cumulative correlation value by an electronic device, according to one or more embodiments.
FIG. 11 is a block diagram illustrating a wireless communication device according to one or more embodiments.
FIG. 12 is a block diagram illustrating an IoT device including an electronic device according to one or more embodiments.
FIG. 13 is a block diagram illustrating a mobile terminal to which an electronic device according to one or more embodiments is applied.

### DETAILED DESCRIPTION

The following description with reference to the accompanying drawings is provided to assist in a comprehensive understanding of various embodiments of the present disclosure.

The term "first," "second," or the like used herein may modify various elements regardless of the order and/or priority thereof, and is used only for distinguishing one element from another element, without limiting example embodiments.

A signal used for high data throughput (HDT) Bluetooth communication may include a short training sequence (STS) portion that repeats at regular intervals. As a result, performing an autocorrelation operation on such a signal may yield an increasing cumulative value. Accordingly, an electronic device may perform such an autocorrelation operation to determine whether a received signal is intended for HDT Bluetooth communication.

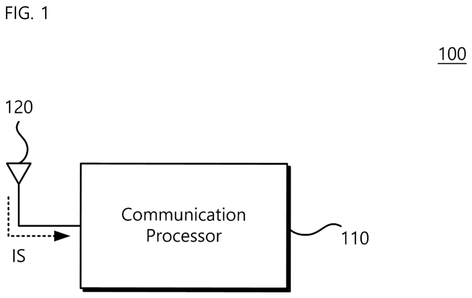

FIG. 1 is a block diagram illustrating an electronic device according to one or more embodiments.

Referring to FIG. 1, an electronic device 100 according to one or more embodiments may include an antenna 120 and a communication processor 110.

For example, the electronic device 100 may include an antenna 120 for transmitting and/or receiving radio-frequency (RF) signals. For example, the electronic device 100 may transmit and/or receive RF signals within a frequency band through the antenna 120. The frequency band may be predetermined.

Accordingly, the electronic device 100 may be referred to as an antenna device, a wireless communication device, or a wireless transceiver.

According to one or more embodiments, the electronic device 100 may receive a receiving signal IS used for Bluetooth communication through the antenna 120. For example, the receiving signal IS may be referred to as an RF signal having a frequency of approximately 2.4 GHz. One of skill in the art will appreciate this frequency is an example and other frequencies may alternatively be used. Generally, the receiving signal IS may be referred to as an RF signal.

According to one or more embodiments, the receiving signal IS may include a plurality of samples, each having a value that repeats every first number of samples. For example, the receiving signal IS may include a plurality of samples, each having a value that repeats every four samples. For example, a portion of the receiving signal IS including a plurality of samples, each having a value that repeats every four samples, may be referred to as a short training sequence (STS) portion. The receiving signal IS may comprise a plurality of sample, each sample may be referred to as a STS portion.

For example, a first sample and a fifth sample of the receiving signal IS may have the same value. A second sample and a sixth sample of the receiving signal IS may have the same value. A third sample and a seventh sample of the receiving signal may have the same value, and a fourth sample and an eight sample of the receiving signal may have the same value. For example, values of the samples included in the receiving signal IS may be represented by the following Equation 1.$IS \left(n\right) = IS \left(n-4\right) ,$
where n may be understood as an integer indicating the order of the samples.

A sample may be understood as a unit of the receiving signal IS sampled by the communication processor 110. Thus, the receiving signal IS may be understood as including a plurality of samples. For example, in one or more embodiments, a sample may have a length of 500 ns, although the sample may have other lengths.

Accordingly, at least a portion of the receiving signal IS may include a plurality of samples, each having a value that repeats every first number of samples. For example, at least a portion of the receiving signal IS (for example, the STS portion) may have periodicity.

The electronic device 100 may include the communication processor 110 electrically connected to the antenna 120.

The communication processor 110 may execute, for example, software (or a program) to control at least one other component of the electronic device 100, and may perform various data processing or computations. The communication processor 110 may include a central processing unit (CPU) or a microprocessor and may control the overall operation of the electronic device 100. In one or more embodiments, the communication processor 110 may include a plurality of communication processors. In the description that follows, operations performed by the electronic device 100 may be understood as being performed under the control of the communication processor 110.

According to one or more embodiments, the communication processor 110 may include an algorithm for obtaining data from the receiving signal IS. For example, the algorithm may be software code programmed within the communication processor 110. For example, the algorithm may be hard-coded within the communication processor 110, but embodiments are not limited thereto.

The communication processor 110 may obtain data, included in the receiving signal IS received through the antenna 120, based on the algorithm.

According to one or more embodiments, the communication processor 110 may generate a first delay signal and a second delay signal, each delayed by a time corresponding to an integer multiple of the sample length from the receiving signal IS.

The communication processor 110 may generate the first delay signal by delaying the receiving signal IS by a first time.

For example, the communication processor 110 may generate the first delay signal by delaying the receiving signal IS by a first time corresponding to the length of half the first number of samples in the receiving signal IS.

For example, in one or more embodiments, the communication processor 110 may generate the first delay signal by delaying the receiving signal IS by 1 µs corresponding to the length of two samples in the receiving signal IS.

The communication processor 110 may generate the second delay signal by delaying the receiving signal IS by a second time different than the first time. The second time may be greater than the first time.

For example, the communication processor 110 may generate the second delay signal by delaying the receiving signal IS by a second time corresponding to the length of the first number of samples in the receiving signal IS.

For example, in one or more embodiments, the communication processor 110 may generate the second delay signal by delaying the receiving signal IS by 2 µs corresponding to the length of four samples in the receiving signal IS.

The communication processor 110 may perform a correlation operation between the receiving signal IS and the first delay signal. For example, the communication processor 110 may perform a correlation operation between corresponding samples in the receiving signal IS and the first delay signal. Corresponding samples may comprise samples in the receiving signal IS which are contemporaneous with the first delay signal. For example, the communication processor 110 may perform a correlation operation between a third sample of the receiving signal IS and the first sample of the first delay signal.

The communication processor 110 may accumulate results of the correlation operation to obtain a first cumulative correlation value.

Since the values of the samples included in each of the receiving signal IS and the first delay signal repeat every first number, the values of the samples included in the result of the correlation operation between the receiving signal IS and the first delay signal may also repeat every first number of samples.

For example, a sum of the values of the first number of repeating samples in the result of the correlation operation between the receiving signal IS and the first delay signal may be "0." Therefore, as the number of samples subjected to the correlation operation increases, an absolute value of the first cumulative correlation value may repeat within a range from "0." The range may be predetermined.

The communication processor 110 may perform a correlation operation between the receiving signal IS and the second delay signal. For example, the communication processor 110 may perform a correlation operation between corresponding samples in the receiving signal IS and the second delay signal. Corresponding samples may comprise samples in the receiving signal IS which are contemporaneous with the second delay signal. The communication processor 110 may accumulate results of the correlation operation to obtain a second cumulative correlation value. For example, the communication processor 110 may perform a correlation operation between the fifth sample of the receiving signal IS and the first sample of the second delay signal.

The values of the samples included in the result of the correlation operation between the receiving signal IS and the second delay signal may each be "1." Therefore, as the number of samples subjected to the correlation operation increases, an absolute value of the second cumulative correlation value may increase.

For example, referring to the above-described configurations, as the number of samples subjected to the correlation operation among the samples included in the receiving signal IS increases, the absolute value of the first cumulative correlation value may repeat within a range and the absolute value of the second cumulative correlation value may increase.

Furthermore, the communication processor 110 may compare the absolute values of the first cumulative correlation value and the second cumulative correlation value with a threshold. The threshold may be predetermined. The communication processor 110 may compare the absolute values of the first cumulative correlation value with a first threshold, and the absolute values of the second cumulative correlation value with a second threshold.

For example, the communication processor 110 may compare the absolute values of the first cumulative correlation value and the second cumulative correlation value with the threshold to determine whether the receiving signal IS is a higher data throughput (HDT) signal.

An HDT signal may be referred to as a signal transmitted and received through an HDT Bluetooth communication protocol, among Bluetooth communication protocols. For example, the communication processor 110 may compare the absolute values of the first cumulative correlation value and the second cumulative correlation value with the threshold to determine whether the receiving signal IS is a signal transmitted based on HDT Bluetooth communication.

According to one or more embodiments, the communication processor 110 may determine whether the absolute value of the first cumulative correlation value is less than the threshold at a first time point at which the absolute value of the second cumulative correlation value is greater than or equal to the threshold.

At the first time point at which the absolute value of the second cumulative correlation value is greater than the threshold, when the absolute value of the first cumulative correlation value is less than the threshold, the communication processor 110 may determine that the receiving signal IS is an HDT signal.

When the receiving signal IS is determined to be an HDT signal, the communication processor 110 may obtain data included in the receiving signal IS.

For example, when the receiving signal IS is determined to be an HDT signal, the communication processor 110 may obtain data included in the receiving signal IS based on information stored corresponding to the receiving signal IS.

The communication processor 110 may determine a second time point at which the absolute value of the second cumulative correlation value has a maximum value, when the absolute value of the first cumulative correlation value is less than the threshold at the first time point at which the absolute value of the second cumulative correlation value is greater than the threshold.

The communication processor 110 may determine a third time point (e.g., a data receiving time point), at which data starts in the receiving signal IS, by adding a time gap to the second time point. The time gap may be prestored. The time gap may correspond to the receiving signal IS at the second time point.

The communication processor 110 may obtain data transmitted through the receiving signal IS from packets received starting from the third time point (e.g., a data receiving time point) at which data starts in the receiving signal IS. For example, the communication processor 110 may obtain data transmitted through the receiving signal IS by applying a gain stored to correspond to the receiving signal IS to the packets received starting from the third time point (e.g., a data receiving time point) at which data starts in the receiving signal IS.

Referring to the above-described configurations, the communication processor 110 according to one or more embodiments may generate a first delay signal and a second delay signal, each delayed by a time corresponding to a different number of samples, from the receiving signal IS received through the antenna 120.

The communication processor 110 may accumulate correlation operation values between each of the first delay signal and the second delay signal and the receiving signal IS to obtain the first cumulative correlation value and the second cumulative correlation value.

The communication processor 110 may compare the absolute values of the first cumulative correlation value and the second cumulative correlation value with a threshold to determine whether the receiving signal IS is an HDT signal. The communication processor 110 may compare the absolute values of the first cumulative correlation value with a first threshold, and the absolute values of the second cumulative correlation value with a second threshold.

When the receiving signal IS is determined to be an HDT signal, the communication processor 110 may obtain data included in the receiving signal IS based on information stored to correspond to the receiving signal IS.

Thus, the communication processor 110 according to the present disclosure may reduce the frequency of falsely detecting a single-tone signal as an HDT signal, compared to detecting an HDT signal using only a single cumulative correlation value.

As a result, the electronic device 100 according to one or more embodiments may significantly reduce degradation in communication performance caused by false detection of a single tone signal as an HDT signal. For example, the electronic device 100 according to one or more embodiments may improve communication performance.

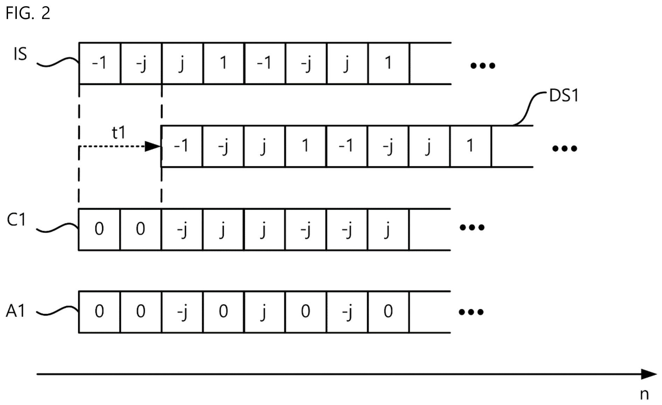

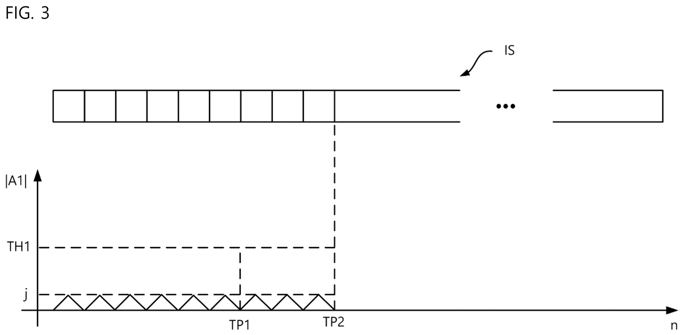

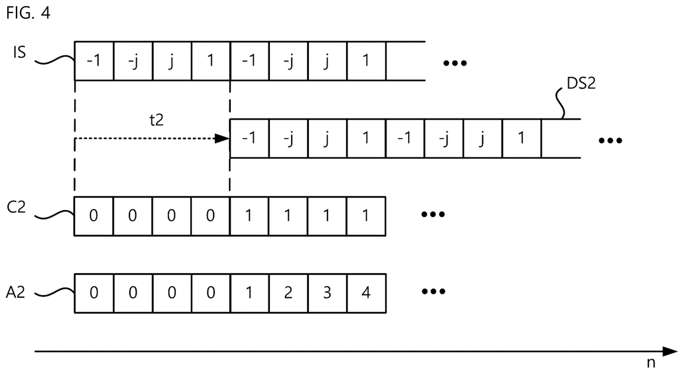

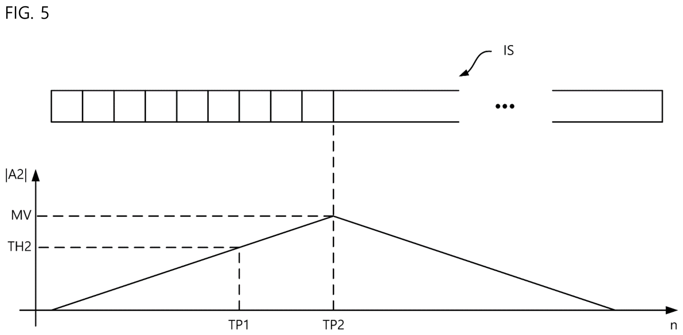

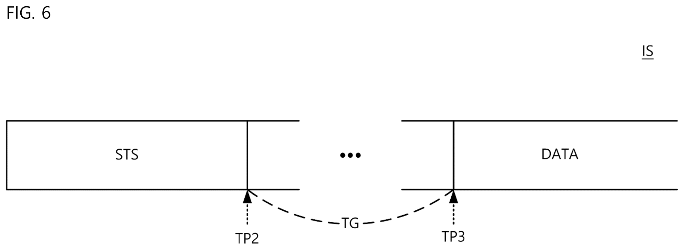

FIG. 2 is a diagram illustrating a configuration, in which a communication processor calculates a first cumulative correlation value, according to one or more embodiments. FIG. 3 is a diagram illustrating a configuration in which a communication processor compares an absolute value of the first cumulative correlation value with a first threshold, according to one or more embodiments. FIG. 4 is a diagram illustrating a configuration in which a communication processor calculates a second cumulative correlation value, according to one or more embodiments. FIG. 5 is a diagram illustrating a configuration in which a communication processor compares an absolute value of the second cumulative correlation value with a second threshold, according to one or more embodiments. FIG. 6 is a diagram illustrating a starting point of a packet including data in a received signal according to one or more embodiments.

Referring to FIGS. 1-6, the communication processor 110 according to one or more embodiments may perform an autocorrelation operation on the receiving signal IS to determine whether the receiving signal IS is an HDT signal. When the receiving signal IS is determined to be an HDT signal, the communication processor 110 may obtain data included in the receiving signal IS based on information stored to correspond to the receiving signal IS.

According to one or more embodiments, the communication processor 110 may generate a first delay signal DS1 by delaying the receiving signal IS by a first time t1.

For example, the communication processor 110 may generate the first delay signal DS1 by delaying the receiving signal IS by a first time t1 corresponding to a length of half the first number of samples in the receiving signal IS.

For example, in one or more embodiments, the communication processor 110 may generate the first delay signal DS1 by delaying the receiving signal IS by 1 µs corresponding to the length of two samples in the receiving signal IS.

Referring to FIG. 2, the values of samples included in each of the receiving signal IS and the first delay signal DS1 may repeat as "-1, -j, j, 1" every four samples. For example, the values of the first sample and the fifth sample of the receiving signal IS may each be "-1." For example, the values of the second sample and the sixth sample of the first delay signal DS1 may each be "-j."

The communication processor 110 may perform a correlation operation between the receiving signal IS and the first delay signal DS1 to output a first correlation value C1.

For example, referring to FIG. 2, the communication processor 110 may perform a multiplication operation on the samples of the receiving signal IS and conjugate complex numbers of the samples of the first delay signal DS1 corresponding to the samples of the receiving signal IS.

The first correlation value C1 may include result values from the correlation operation between corresponding samples in each of the receiving signal IS and the first delay signal DS1. For example, the first correlation value C1 may include a result value (for example, "-j") of the correlation operation between the third sample of the receiving signal IS and the first sample of the first delay signal DS1.

Since the values of the samples included in each of the receiving signal IS and the first delay signal DS1 repeat every first number of (for example, four) samples, values of the samples included in the first correlation value C1 may also repeat every first number of samples. For example, the values of the samples included in the first correlation value C1 may repeat as "-j, j, j, -j" every four samples.

The communication processor 110 may accumulate the first correlation value C1 to obtain the first cumulative correlation value A1.

For example, the communication processor 110 may accumulate the results of the correlation operation between the samples of the receiving signal IS and the samples of the first delay signal DS1 corresponding to the samples of the receiving signal IS to obtain the first cumulative correlation value A1.

Referring to FIG. 2 and FIG. 3, the absolute value of the first cumulative correlation value A1 may repeat within a range as the number of samples subjected to the correlation operation increases. The range may be predetermined. For example, the absolute value of the first cumulative correlation value A1 may repeat within a range as the number of samples subjected to the correlation operation for the STS portion STS increases.

For example, the first cumulative correlation value A1 may repeat every four samples as "-j, 0, j, 0". Therefore, the absolute value of the first cumulative correlation value A1 may repeat between "0" and "j".

A sum of the values of the first number of repeating samples included in the first cumulative correlation value A1 may be "0." Therefore, as the number of samples subjected to the correlation operation increases, the absolute value of the first cumulative correlation value A1 may repeat within the range of "0" to "j", as shown in FIG. 3.

Turning to FIG. 4, the communication processor 110 may generate a second delay signal DS2 by delaying the receiving signal IS by a second time t2 greater than the first time t1.

For example, the communication processor 110 may generate the second delay signal DS2 by delaying the receiving signal IS by a second time t2 corresponding to the length of the first number of samples in the receiving signal IS.

For example, in one or more embodiments, the communication processor 110 may generate the second delay signal DS2 by delaying the receiving signal IS by 2 µs corresponding to the length of four samples in the receiving signal IS.

Referring to FIG. 4, the values of the samples included in the second delay signal DS2 may repeat as "-1, -j, j, 1" every four samples.

The communication processor 110 may perform a correlation operation between the receiving signal IS and the second delay signal DS2 to output a second correlation value C2.

For example, referring to FIG. 4, the communication processor 110 may perform a multiplication operation on the samples of the receiving signal IS and the conjugate complex numbers of the samples of the second delay signal DS2 corresponding to the samples of the receiving signal IS.

The second correlation value C2 may include result values from the correlation operation between corresponding samples in each of the receiving signal IS and the second delay signal DS2. For example, the second correlation value C2 may include a result value (for example, "1") of the correlation operation between the fifth sample of the receiving signal IS and the first sample of the second delay signal DS2.

The values of the samples included in the receiving signal IS may repeat every first number of samples, and the second delay signal DS2 may be a signal delayed by the first number of samples from the receiving signal IS. For example, the samples subjected to the correlation operation in the receiving signal IS and the second delay signal DS2 may have the same values. Therefore, the value of each sample included in the second correlation value C2 may be "1."

The communication processor 110 may accumulate the second correlation value C2 to obtain the second cumulative correlation value A2.

For example, the communication processor 110 may accumulate the results of the correlation operation between the samples of the receiving signal IS and the samples of the second delay signal DS2 corresponding to the samples of the receiving signal IS to obtain the second cumulative correlation value A2.

Referring to FIG. 4 and FIG. 5, the absolute value of the second cumulative correlation value A2 may increase as the number of samples subjected to the correlation operation increases. For example, the absolute value of the second cumulative correlation value A2 may increase as the number of samples subjected to the correlation operation in the STS portion STS increases. For example, the value of each sample included in the second cumulative correlation value A2 may increase by "1" as the number of samples subjected to the correlation operation within the STS portion STS increases.

Referring to FIG. 3 and FIG. 5, the communication processor 110 may compare the absolute values of the first cumulative correlation value A1 and the second cumulative correlation value A2 with a first threshold TH1 and a second threshold TH2, respectively. The first threshold TH1 may be predetermined, and the second threshold TH2 may be predetermined.

For example, the communication processor 110 may compare the absolute value of the first cumulative correlation value A1 with the first threshold TH1. The communication processor 110 may compare the absolute value of the second cumulative correlation value A2 with the second threshold TH2.

For example, the first threshold TH1 and the second threshold TH2 may have the same value, but embodiments are not limited thereto. For example, in one or more embodiments, the first threshold TH1 may have a value less than the second threshold TH2.

The communication processor 110 may compare the absolute value of each of the first cumulative correlation value A1 and the second cumulative correlation value A2 with the first threshold TH1 and the second threshold TH2 to determine whether the receiving signal IS is an HDT signal.

The HDT signal may be referred to as a signal transmitted and received through an HDT Bluetooth communication protocol, among Bluetooth communication protocols. For example, the communication processor 110 may compare the absolute value of each of the first cumulative correlation value A1 and the second cumulative correlation value A2 with the first threshold TH1 and the second threshold TH2 to determine whether the receiving signal IS is a signal transmitted based on the HDT Bluetooth communication protocol.

The communication processor 110 may determine whether the absolute value of the first cumulative correlation value A1 is less than the first threshold TH1 at a first time point TP1 at which the absolute value of the second cumulative correlation value A2 is greater than or equal to the second threshold TH2.

For example, at the first time point TP1 at which the absolute value of the second cumulative correlation value A2 is greater than or equal to the second threshold TH2, when the absolute value of the first cumulative correlation value A1 is less than the first threshold TH1, the communication processor 110 may determine that the receiving signal IS is an HDT signal.

When the receiving signal IS is determined to be an HDT signal, the communication processor 110 may obtain the data DATA included in the receiving signal IS.

For example, when the receiving signal IS is determined to be an HDT signal, the communication processor 110 may obtain the data DATA included in the receiving signal IS based on information stored to correspond to the receiving signal IS.

Referring to FIG. 5, when the absolute value of the first cumulative correlation value A1 is less than the first threshold TH1 at the first time point TP1 at which the absolute value of the second cumulative correlation value A2 is greater than or equal to the second threshold TH2, the communication processor 110 may determine a second time point TP2, at which the absolute value of the second cumulative correlation value A2 has a maximum value MV.

Referring to FIG. 6, the communication processor 110 may determine a third time point TP3 (e.g., a data receiving time point) at which the data DATA starts in the receiving signal IS by adding a time gap TG to the second time point TP2 at which the absolute value of the second cumulative correlation value A2 has a maximum value MV. The time gap TG may be predetermined. The time gap TG may correspond to the receiving signal IS at the second time point TP2 at which the absolute value of the second cumulative correlation value A2 has a maximum value MV.

The second time point TP2, at which the absolute value of the second cumulative correlation value A2 has a maximum value MV, may be referred to as a time point at which the STS portion in the receiving signal IS ends. In other words, during the STS portion, the absolution value of the second cumulative correlation value A2 will continue to increase until the STS portion ends, and once the STS portion ends, the absolute value of the second cumulative correlation value A2 will stop increasing, resulting in the maximum value MV of the second cumulative correlation value A2.

The communication processor 110 may obtain the data DATA transmitted through the receiving signal IS from packets received starting from the third time point TP3 (e.g., a data receiving time point) at which the data DATA starts in the receiving signal IS. For example, the communication processor 110 may obtain the data DATA transmitted through the receiving signal IS by applying a gain stored to correspond to the samples of the receiving signal IS to packets received starting from the third time point at TP3 (e.g., a data receiving time point).

Referring to the above-described configurations, the communication processor 110 according to one or more embodiments may generate a first delay signal DS1 and a second delay signal DS2, each delayed by a time corresponding to a different number of samples, from the receiving signal IS received through the antenna 120.

Furthermore, the communication processor 110 may accumulate the result values of the correlation operation between each of the first delay signal DS1 and the second delay signal DS2 and the receiving signal IS to obtain the first cumulative correlation value A1 and the second cumulative correlation value A2.

The communication processor 110 may compare the absolute value of each of the first cumulative correlation value A1 and the second cumulative correlation value A2 with the first threshold TH1 and the second threshold TH2, respectively, to determine whether the receiving signal IS is an HDT signal.

For example, the communication processor 110 may determine that the receiving signal IS is an HDT signal when the absolute value of the first cumulative correlation value A1 is less than the first threshold TH1 at the time point at which the absolute value of the second cumulative correlation value A2 is greater than or equal to the second threshold TH2.

When the receiving signal IS is determined to be an HDT signal, the communication processor 110 may obtain the data DATA included in the receiving signal IS based on information stored to correspond to the receiving signal IS (for example, a time gap TG or gain).

Accordingly, the communication processor 110 according to one or more embodiments may reduce a frequency of falsely detecting a single-tone signal as an HDT signal, compared to detecting an HDT signal using only a single cumulative correlation value.

As a result, the electronic device 100 according to one or more embodiments may significantly reduce degradation in communication performance caused by falsely detecting a single-tone signal as an HDT signal. For example, the electronic device 100 according to one or more embodiments may improve communication performance.

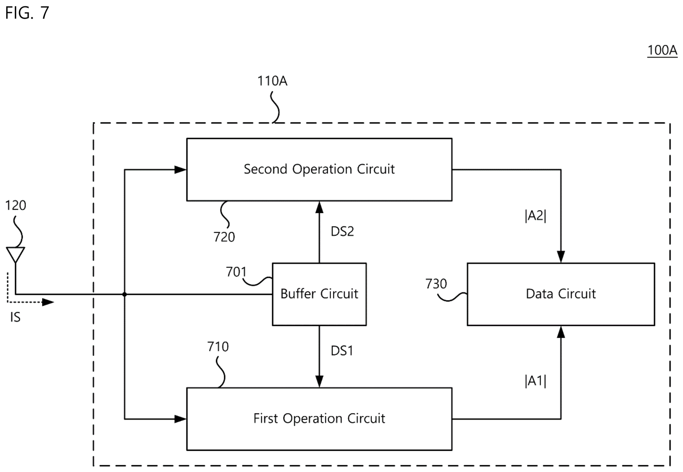

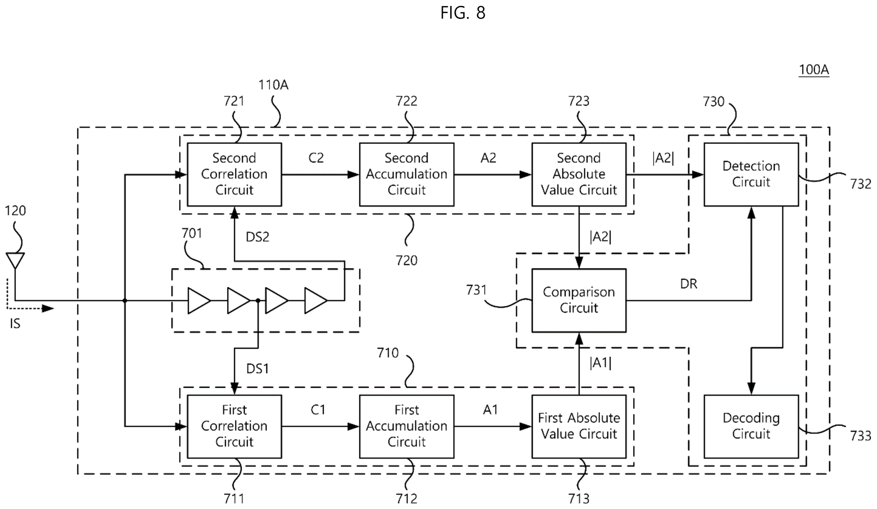

FIG. 7 is a block diagram illustrating a configuration of an electronic device according to one or more embodiments. FIG. 8 is a block diagram illustrating a more detailed configuration of a communication processor in the electronic device of FIG. 7.

Referring to FIG. 7 and FIG. 8, an electronic device 100A according to one or more embodiments may include the antenna 120 and a communication processor 110A.

The electronic device 100A and the communication processor 110A illustrated in FIG. 7 and FIG. 8 may be understood as examples of the electronic device 100 and the communication processor 110 illustrated in FIG. 1, respectively. Therefore, the same or substantially the same components are represented by the same reference numerals, and redundant descriptions will be omitted to avoid repetition.

Referring to FIG. 7, the communication processor 110A according to one or more embodiments may include a buffer circuit 701, a first operation circuit 710, a second operation circuit 720, and a data circuit 730.

According to one or more embodiments, the communication processor 110A may include the buffer circuit 701 outputting a first delay signal DS1 and a second delay signal DS2 from a receiving signal IS.

Referring to FIG. 8, the buffer circuit 701 according to one or more embodiments may include a plurality of buffers. For example, the buffer circuit 701 may include a plurality of buffers connected in series.

Each of the plurality of buffers may delay a received signal by a length of a single sample in the receiving signal IS (for example, 500 ns).

For example, the buffer circuit 701 may output a first delay signal DS1 in which the receiving signal IS is delayed by a first time.

The first time may be referred to as a time corresponding to the length of half the first number of (for example, four) samples in the receiving signal IS. For example, when the receiving signal IS includes samples each having a length of 500 ns, the first time may be referred to as 1 µs corresponding to the length of two samples. Accordingly, for example, the buffer circuit 701 may generate a first delay signal DS1 in which the receiving signal IS is delayed by 1 µs.

The buffer circuit 701 may output a second delay signal DS2 in which the receiving signal IS is delayed by a second time.

The second time may be referred to as a time corresponding to the length of the first number of (for example, four) samples in the receiving signal IS. For example, when the receiving signal IS includes samples each having a length of 500 ns, the second time may be referred to as 2 µs corresponding to the length of four samples. Accordingly, for example, the buffer circuit 701 may generate a second delay signal DS2 in which the receiving signal IS is delayed by 2 µs.

The communication processor 110A may include the first operation circuit 710 that calculates and outputs an absolute value of the first cumulative correlation value A1 based on the receiving signal IS and the first delay signal DS1.

The first operation circuit 710 may accumulate the results of the correlation operation between corresponding samples in each of the receiving signal IS and the first delay signal DS1 to generate the first cumulative correlation value A1 and output the first cumulative correlation value A1.

Referring to FIG. 8, the first operation circuit 710 may include a first correlation circuit 711, a first accumulation circuit 712, and a first absolute value circuit 713.

The first correlation circuit 711 may perform a correlation operation between corresponding samples in each of the receiving signal IS and the first delay signal DS1 to output a first correlation value C1. For example, the first correlation circuit 711 may perform a correlation operation between the third sample of the receiving signal IS and the first sample of the first delay signal DS1. For example, the first correlation circuit 711 may perform a multiplication operation on samples of the receiving signal IS and conjugating complex numbers of the samples corresponding to the first delay signal DS1.

Since the values of the samples included in each of the receiving signal IS and the first delay signal DS1 repeat every first number of samples, the values of the samples included in the first correlation value C1, which is the result of the correlation operation between the receiving signal IS and the first delay signal DS1, may also repeat every first number of samples.

The first accumulation circuit 712 may accumulate the results of the correlation operation to output the first cumulative correlation value A1. For example, the first accumulation circuit 712 may accumulate the values of the samples included in the first correlation value C1 to generate the first cumulative correlation value A1, and output the first cumulative correlation value A1. For example, the first accumulation circuit 712 may accumulate the results of the correlation operation for a time (for example, 18 µs) corresponding to the samples included in the STS portion of the receiving signal IS to output the first cumulative correlation value A1.

For example, the sum of the values of the first number of repeating samples in the result of the correlation operation between the receiving signal IS and the first delay signal DS1 may be "0." Therefore, as the number of samples subjected to the correlation operation increases, the absolute value of the first cumulative correlation value A1 may repeat within a range (for example, "j") from "0." The range may be predetermined.

The first absolute value circuit 713 may calculate an absolute value of the first cumulative correlation value A1 and output the absolute value of the first cumulative correlation value A1 from the first cumulative correlation value A1.

The second operation circuit 720 may include a second correlation circuit 721, a second accumulation circuit 722, and a second absolute value circuit 723.

The second correlation circuit 721 may perform a correlation operation between corresponding samples in each of the receiving signal IS and the second delay signal DS2 to output a second correlation value C2. For example, the second correlation circuit 721 may perform a correlation operation between the fifth sample of the receiving signal IS and the first sample of the second delay signal DS2. For example, the second correlation circuit 721 may perform a multiplication operation on samples of the receiving signal IS and conjugating complex numbers of the samples corresponding to the second delay signal DS2.

The values of the samples included in the receiving signal IS repeat every first number of samples, and the second delay signal DS2 may be a signal delayed by the first number of samples from the receiving signal IS. For example, the samples subjected to the correlation operation in the receiving signal IS and the second delay signal DS2 may have the same values. Accordingly, the value of each sample included in the second correlation value C2, which is the result of the correlation operation between the receiving signal IS and the second delay signal DS2, may be "1."

The second accumulation circuit 722 may accumulate the results of the correlation operation to generate the second cumulative correlation value A2 and output the second cumulative correlation value A2. For example, the second accumulation circuit 722 may accumulate the values of the samples included in the second correlation value C2 to generate the second cumulative correlation value A2 and output the second cumulative correlation value A2.

The second absolute value circuit 723 may calculate an absolute value of the second cumulative correlation value A2 and output the absolute value of the second cumulative correlation value A2 from the second cumulative correlation value A2.

When the value of each sample included in the second correlation value C2 is "1," the magnitude of the absolute value of the second cumulative correlation value A2 may increase as the number of samples subjected to the correlation operation increases. For example, the value of each sample included in the second cumulative correlation value A2 may increase by "1" as the number of samples subjected to the correlation operation increases.

Referring to FIG. 8, the data circuit 730 may include a comparison circuit 731, a detection circuit 732, and a decoding circuit 733.

The data circuit 730 may include a comparison circuit 731 that compares the absolute value of each of the first cumulative correlation value A1 and the second cumulative correlation value A2 with a first threshold TH1 and a second threshold TH2 to output a detection request DR. The first threshold TH1 may be predetermined, and the second threshold TH2 may be predetermined.

For example, the comparison circuit 731 may compare the absolute value of the first cumulative correlation value A1 with the first threshold TH1 and the absolute value of the second cumulative correlation value A2 with the second threshold TH2 to determine whether the receiving signal IS is an HDT signal.

For example, the first threshold TH1 and the second threshold TH2 may have the same value, but embodiments are not limited thereto. For example, the first threshold TH1 may have a value less than the second threshold TH2.

The HDT signal may be referred to as a signal transmitted and received through HDT Bluetooth communication protocol, among Bluetooth communication protocols. For example, the communication processor 110 may compare the absolute value of the first cumulative correlation value A1 with the first threshold TH1 and the absolute value of the second cumulative correlation value A2 with the second threshold TH2 to determine whether the receiving signal IS is a signal transmitted based on HDT Bluetooth communication protocol.

According to one or more embodiments, the comparison circuit 731 may determine that the receiving signal IS is an HDT signal when the absolute value of the first cumulative correlation value A1 is less than the first threshold TH1 at a first time point TP1 at which the absolute value of the second cumulative correlation value A2 is greater than or equal to the second threshold TH2. The comparison circuit 731 may output the detection request DR when the receiving signal IS is determined to be an HDT signal.

For example, the comparison circuit 731 may output the detection request DR when the absolute value of the first cumulative correlation value Al is less than the first threshold TH1 at the first time point TP1 at which the absolute value of the second cumulative correlation value A2 is greater than or equal to the second threshold TH2.

The data circuit 730 may include the detection circuit 732 that identifies a maximum absolute value of the second cumulative correlation value A2 in response to the detection request DR.

For example, the detection circuit 732 may detect a second time point TP2, at which the absolute value of the second cumulative correlation value A2 has a maximum value MV, in response to the detection request DR. For example, the second time point TP2, at which the absolute value of the absolute value of the second cumulative correlation value A2 has a maximum value MV, may be referred to as a time point at which the STS portion in the receiving signal IS ends.

For example, when the absolute value of the first cumulative correlation value A1 is less than the first threshold TH1 at the first time point TP1 at which the absolute value of the second cumulative correlation value A2 is greater than or equal to the second threshold TH2, the detection circuit 732 may determine the second time point TP2 at which the absolute value of the second cumulative correlation value A2 has a maximum value MV.

The data circuit 730 may include the decoding circuit 733 obtaining data from the receiving signal IS based on the second time point TP2 at which the absolute value of the second cumulative correlation value A2 has a maximum value MV.

For example, the decoding circuit 733 may determine a third time point TP3 (e.g., a data receiving time point) at which data in the receiving signal IS starts by adding a time gap to the second time point TP2 at which the absolute value of the second cumulative correlation value A2 has a maximum value MV. The time gap may be prestored. The time gap may correspond to the receiving signal IS at the second time point TP2 at which the absolute value of the second cumulative correlation value A2 has a maximum value MV.

The decoding circuit 733 may decode received packets starting from the third time point TP3 (e.g., a data receiving time point), at which data starts in the receiving signal IS, to obtain data transmitted through the receiving signal IS.

For example, the decoding circuit 733 may obtain data transmitted through the receiving signal IS by applying a gain that corresponds to the receiving signal IS to packets received starting from the third time point TP3 (e.g., a data receiving time point) at which data starts in the receiving signal IS. The gain may be prestored.

Referring to the above-described configurations, the communication processor 110A according to one or more embodiments may generate a first delay signal DS1 and a second delay signal DS2, each delayed by a time corresponding to a different number of samples, from the receiving signal IS received through the antenna 120.

The communication processor 110A may accumulate the result values of the correlation operation between each of the first delay signal DS1 and the second delay signal DS2 and the receiving signal IS to obtain the first cumulative correlation value A1 and the second cumulative correlation value A2.

The communication processor 110A may compare an absolute value of each of the first cumulative correlation value A1 and the second cumulative correlation value A2 with the first threshold TH1 and the second threshold TH2 to determine whether the receiving signal IS is an HDT signal.

For example, the communication processor 110A may determine that the receiving signal IS is an HDT signal when the absolute value of the first cumulative correlation value A1 is less than the first threshold TH1 at the time point at which the absolute value of the second cumulative correlation value A2 is greater than or equal to the second threshold TH2.

When the receiving signal IS is determined to be an HDT signal, the communication processor 110A may obtain data transmitted through the receiving signal IS based on information that corresponds to the receiving signal IS (for example, a time gap or gain).

Accordingly, the communication processor 110A according to one or more embodiments may reduce a frequency of falsely detecting a single-tone signal as an HDT signal, compared to detecting an HDT signal using only a single cumulative correlation value.

As a result, the electronic device 100A according to one or more embodiments may significantly reduce degradation in communication performance caused by falsely detecting a single-tone signal as an HDT signal. For example, the electronic device 100A according to one or more embodiments may improve communication performance.

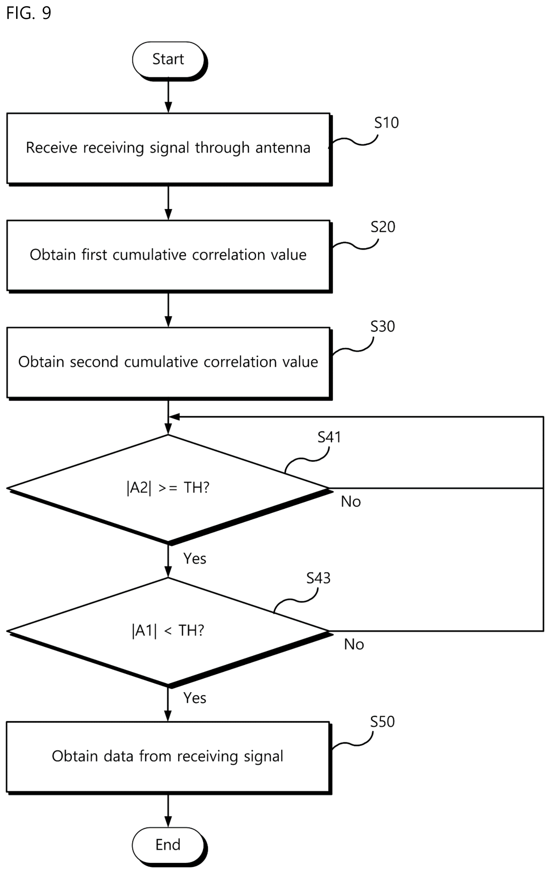

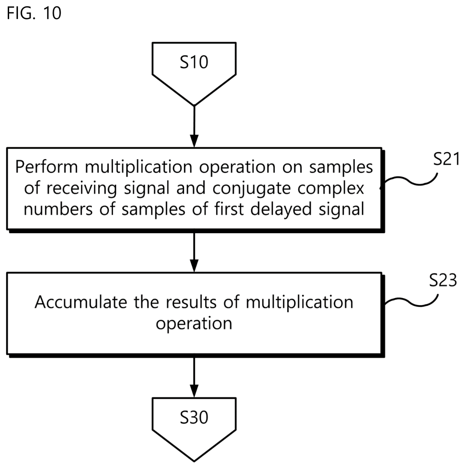

FIG. 9 is a flowchart illustrating a method of receiving a signal in an electronic device according to one or more embodiments. FIG. 10 is a flowchart illustrating a method of calculating a first cumulative correlation value by an electronic device according to one or more embodiments.

Referring to FIGS. 9 and 10, the communication processor 110 according to one or more embodiments may perform an autocorrelation operation on the receiving signal IS to determine whether the receiving signal IS is an HDT signal. Furthermore, when the receiving signal IS is determined to be an HDT signal, the communication processor 110 may obtain data DATA included in the receiving signal IS based on information stored to correspond to the receiving signal IS.

Referring to FIG. 9, in operation S10, the communication processor 110 (or the electronic device 100) according to one or more embodiments may receive the receiving signal IS through the antenna 120.

For example, the receiving signal IS may be referred to as an RF signal having a frequency of approximately 2.4 GHz. For example, the receiving signal IS may be understood as a signal used for Bluetooth communication.

The receiving signal IS according to one or more embodiments may include a plurality of samples, each having a value that repeats every first number of samples. For example, the receiving signal IS may include a plurality of samples, each having a value that repeats every four samples. For example, a portion of the receiving signal IS, including a plurality of samples, each having a value that repeats every four samples, may be referred to as an STS portion.

In operation S20, the communication processor 110 according to one or more embodiments may obtain a first cumulative correlation value A1. For example, the communication processor 110 may obtain the first cumulative correlation value Al based on the receiving signal IS and the first delay signal DS1.

The communication processor 110 may generate a first delay signal DS1 by delaying the receiving signal IS by a first time t1.

The first time t1 may be referred to as a time corresponding to the length of half the first number of (for example, four) samples in the receiving signal IS. For example, when the receiving signal IS includes samples, each having a length of 500 ns, the first time t1 may be referred to as 1 µs corresponding to the length of two samples.

Accordingly, for example, the communication processor 110 may generate the first delay signal DS1 by delaying the receiving signal IS by 1 µs corresponding to the length of two samples in the receiving signal IS.

Referring to FIG. 10, the communication processor 110 may accumulate the result values of the correlation operation between the receiving signal IS and the first delay signal DS1 to obtain the first cumulative correlation value A1.

In operation S21, the communication processor 110 according to one or more embodiments may perform a multiplication operation on the samples of the receiving signal IS and conjugate complex numbers of the samples of the first delay signal DS1 corresponding to the samples of the receiving signal IS.

For example, the communication processor 110 may perform a correlation operation between corresponding samples in each of the receiving signal IS and the first delay signal DS1 to output a first correlation value C1. The first correlation value C1 may include result values from the correlation operation between corresponding samples in each of the receiving signal IS and the first delay signal DS1. For example, the first correlation value C1 may include a result value of the correlation operation between the third sample of the receiving signal IS and the first sample of the first delay signal DS1.

Since the values of the samples included in each of the receiving signal IS and the first delay signal DS1 repeat every first number of (for example, four) samples, the values of the samples included in the first correlation value C1 may also repeat every first number of samples. For example, the values of the samples included in the first correlation value C1 may repeat as "-j, j, j, -j" every four samples.

In operation S23, the communication processor 110 according to one or more embodiments may accumulate the results of the multiplication operation to obtain a first cumulative correlation value A1.

For example, the communication processor 110 may accumulate the results of the correlation operation between the samples of the receiving signal IS and the samples of the first delay signal DS1 corresponding to the samples of the receiving signal IS to obtain the first cumulative correlation value A1.

An absolute value of the first cumulative correlation value A1 may repeat within a range as the number of samples subjected to the correlation operation increases. For example, the first cumulative correlation value A1 may repeat as "-j, 0, j, 0" every four samples. Accordingly, the absolute value of the first cumulative correlation value A1 may repeat between "0" and "j."

The sum of the values of the first number of repeating samples included in the first cumulative correlation value A1 may be "0." Therefore, as the number of samples subjected to the correlation operation increases, the absolute value of the first cumulative correlation value A1 may repeat within the range of "0" to "j."

Referring to FIG. 9, in operation S30, the communication processor 110 according to one or more embodiments may obtain the second cumulative correlation value A2. For example, the communication processor 110 may obtain the second cumulative correlation value A2 based on the receiving signal IS and the second delay signal DS2.

The communication processor 110 may generate a second delay signal DS2 by delaying the receiving signal IS by a second time t2 greater than the first time t1.

For example, the communication processor 110 may generate the second delay signal DS2 by delaying the receiving signal IS by a second time t2 corresponding to the length of the first number of samples in the receiving signal IS.

For example, the communication processor 110 may generate the second delay signal DS2 by delaying the receiving signal IS by 2 µs corresponding to the length of four samples in the receiving signal IS.

The communication processor 110 may perform a correlation operation between the receiving signal IS and the second delay signal DS2 to output a second correlation value C2.

For example, the communication processor 110 may perform a multiplication operation on the samples of the receiving signal IS and conjugate complex numbers of the samples of the second delay signal DS2 corresponding to the samples of the receiving signal IS.

The second correlation value C2 may include result values from the correlation operation between corresponding samples in each of the receiving signal IS and the second delay signal DS2. For example, the second correlation value C2 may include a result value of the correlation operation between the fifth sample of the receiving signal IS and the first sample of the second delay signal DS2.

The values of the samples included in the receiving signal IS may repeat every first number of samples, and the second delay signal DS2 may be a signal delayed by the first number of samples from the receiving signal IS. For example, the samples subjected to the correlation operation in the receiving signal IS and the second delay signal DS2 may have the same values. Therefore, a value of each sample included in the second correlation value C2 may be "1."

The communication processor 110 may accumulate the second correlation value C2 to obtain a second cumulative correlation value A2.

For example, the communication processor 110 may accumulate the results of the correlation operation between the samples of the receiving signal IS and the samples of the second delay signal DS2 corresponding to the samples of the receiving signal IS to obtain the second cumulative correlation value A2.

The absolute value of the second cumulative correlation value A2 may increase as the number of samples subjected to the correlation operation increases. For example, the value of each sample included in the second cumulative correlation value A2 may increase by "1" as the number of samples subjected to the correlation operation increases.

According to one or more embodiments, the communication processor 110 may compare the absolute value of each of the first cumulative correlation value A1 and the second cumulative correlation value A2 with a first threshold TH1 and a second threshold TH2, respectively.

In operation S41, the communication processor 110 according to one or more embodiments may determine whether the absolute value of the second cumulative correlation value A2 is greater than or equal to the second threshold TH2. When it is determined that the absolute value of the second cumulative correlation value A2 is not greater than or equal to the second threshold TH2 (operation S41, No), the process may return to operation S41.

For example, when it is determined that the absolute value of the second cumulative correlation value A2 is greater than or equal to the second threshold TH2, the communication processor 110 may determine a first time point TP1 at which the absolute value of the second cumulative correlation value A2 is greater than or equal to the second threshold TH2.

When it is determined that the absolute value of the second cumulative correlation value A2 is greater than or equal to the second threshold TH2 (operation S41, Yes), the communication processor 110 according to one or more embodiments may determine whether the absolute value of the first cumulative correlation value A1 is less than the first threshold TH1 (operation S43).

For example, the communication processor 110 may determine whether the absolute value of the first cumulative correlation value A1 is less than the first threshold TH1 at the first time point TP1 at which the absolute value of the second cumulative correlation value A2 is greater than or equal to the second threshold TH2.

For example, the first threshold TH1 and the second threshold TH2 may have the same value, but embodiments are not limited thereto. For example, the first threshold TH1 may have a value less than the second threshold TH2.

When it is determined that the absolute value of the first cumulative correlation value A1 is not less than the first threshold TH1 (operation S43, No), the process may return to operation S41.

When the absolute value of the first cumulative correlation value A1 is less than the first threshold TH1 at the first time point TP1 at which the absolute value of the second cumulative correlation value A2 is greater than the second threshold TH2 (operation S43, Yes), the communication processor 110 may determine that the receiving signal IS is an HDT signal and may perform operation S50. The HDT signal may be referred to as a signal transmitted and received through HDT Bluetooth communication protocol, among Bluetooth communication protocols.

In operation S50, the communication processor 110 according to one or more embodiments may obtain the data DATA included in the receiving signal IS.

For example, the communication processor 110 may determine a second time point TP2 at which the absolute value of the second cumulative correlation value A2 has a maximum value MV, when the absolute value of the first cumulative correlation value A1 is less than the first threshold TH1 at the first time point TP1 at which the absolute value of the second cumulative correlation value A2 is greater than the second threshold TH2.

The communication processor 110 may determine a third time point TP3 (e.g., a data receiving time point) at which data DATA starts in the receiving signal IS by adding a prestored time gap TG to the second time point TP2 at which the absolute value of the second cumulative correlation value A2 has a maximum value MV. The time gap TG may correspond to the receiving signal IS at the second time point TP2 at which the absolute value of the second cumulative correlation value A2 has a maximum value MV.

The second time point TP2, at which the absolute value of the second cumulative correlation value A2 has a maximum value MV, may correspond to a time point at which the STS portion in the receiving signal IS ends.

The communication processor 110 may obtain data DATA transmitted through the receiving signal IS from packets received starting from the third time point TP3 (e.g., a data receiving time point) at which data DATA starts in the receiving signal IS.

For example, the communication processor 110 may obtain data DATA transmitted through the receiving signal IS by applying a gain stored to correspond to the receiving signal IS to packets received starting from the third time point TP3 (e.g., a data receiving time point) at which data DATA starts in the receiving signal IS.

Referring to the above-described configurations, the communication processor 110 according to one or more embodiments may generate a first delay signal DS1 and a second delay signal DS2, each delayed by a time corresponding to a different number of samples, from the receiving signal IS received through the antenna 120.

The communication processor 110 may accumulate the result values of the correlation operation between each of the first delay signal DS1 and the second delay signal DS2 and the receiving signal IS to obtain the first cumulative correlation value A1 and the second cumulative correlation value A2.

In addition, the communication processor 110 may compare an absolute value of each of the first cumulative correlation value A1 and the second cumulative correlation value A2 with the first threshold TH1 and the second threshold TH2 to obtain data DATA transmitted through the receiving signal IS.

For example, the communication processor 110 may obtain data DATA included in the receiving signal IS based on information that corresponds to the receiving signal IS (for example, a time gap TG or gain) when the absolute value of the first cumulative correlation value A1 is less than the first threshold TH1 at the time point at which the absolute value of the second cumulative correlation value A2 is greater than or equal to the second threshold TH2.

Accordingly, the communication processor 110 according to one or more embodiments may reduce a frequency of falsely detecting a single-tone signal as an HDT signal compared to detecting an HDT signal using only a single cumulative correlation value.

As a result, the electronic device 100 according to one or more embodiments may significantly reduce degradation in communication performance caused by falsely detecting a single-tone signal as an HDT signal. For example, the electronic device 100 according to one or more embodiments may improve communication performance.

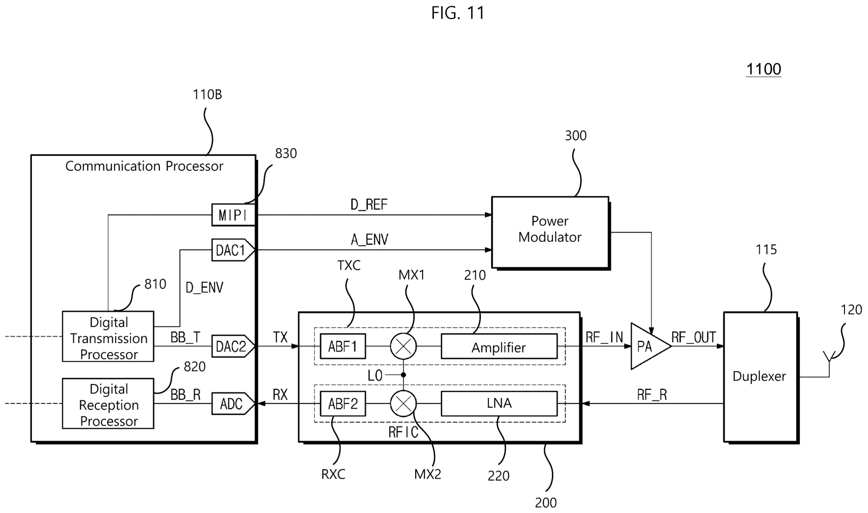

FIG. 11 is a block diagram illustrating a wireless communication device according to one or more embodiments.

Referring to FIG. 11, a wireless communication device 1100 according to one or more embodiments may include a communication processor 110B, a radio frequency integrated circuit (RFIC) 200, a power modulator 300, a duplexer 115, a power amplifier PA, and the antenna 120.

The wireless communication device 1100 and the configuration thereof illustrated in FIG. 11 may be understood as an example of the electronic device 100 and the configuration thereof illustrated in FIG. 1, respectively. For example, in one or more embodiments, the communication processor 110B may be an example of the communication processor 110 in FIG. 1. Therefore, the same or substantially the same components are represented by the same reference numerals, and redundant descriptions will be omitted to avoid repetition.

The communication processor 110B may process a baseband signal BB_T based on a specified communication method through an internal digital transmission processor 810. In addition, the communication processor 110B may process a received baseband signal BB_R based on a specified communication method through a digital reception processor 820.

For example, the communication processor 110B may process signals to be transmitted or received signals based on communication methods such as orthogonal frequency division multiplexing (OFDM), orthogonal frequency division multiple access (OFDMA), wideband code multiple access (WCDMA), or high speed packet access (HSPA+). The communication processor 110B may process a baseband signal BB_T or BB_R based on various types of communication methods (for example, various communication methods to which a technique for modulating or demodulating an amplitude and/or a frequency of the baseband signal BB_T or BB_R is applied).

The communication processor 110B may extract an envelope of the baseband signal BB_T through the digital transmission processor 810 and generate a digital envelope signal D_ENV based on the extracted envelope. The communication processor 110B may generate an average power signal D_REF based on an average power tracking table stored in a memory. The extracted envelope may correspond to the amplitude component of the baseband signal BB_T (for example, the magnitude of the I signal and the Q signal).

The communication processor 110B may perform digital-to-analog conversion on the baseband signal BB_T and the digital envelope signal D_ENV using a plurality of internal digital-to-analog converters DAC1 and DAC2 to generate a transmission signal TX and an analog envelope signal A_ENV, which are analog signals. For example, the average power signal D_REF output from the communication processor 110B may be a digital signal. Accordingly, the average power signal D_REF may be provided to a digital-to-analog converter included in the power modulator 300 through MIPI 830 and converted into an analog signal, such as a reference voltage signal, through the digital-to-analog converter included in the power modulator 300. For reference, the digital-to-analog converters DAC1 and DAC2 included in the communication processor 110B may operate at a relatively higher speed than the digital-to-analog converter included in the power modulator 300.

However, embodiments are not limited thereto, and in some embodiments, the communication processor 110B may convert the average power signal D_REF into an analog signal through an internal digital-to-analog converter and output the analog signal. The communication processor 110B may provide the average power signal converted into an analog signal to the power modulator 300 as a reference voltage signal.

For simplicity, the description uses an example where the communication processor 110B provides the average power signal D_REF to a digital-to-analog converter included in the power modulator 300 through MIPI 830.

Each of the transmission signal TX and the analog envelope signal A_ENV may a differential signal including a positive signal and a negative signal.

The communication processor 110B may receive a receiving signal RX, an analog signal, from the RFIC 200. The communication processor 110B may perform analog-to-digital conversion on the receiving signal RX through an internal analog-to-digital converter ADC to extract a baseband signal BB_R, a digital signal. The receiving signal RX may be a differential signal including a positive signal and a negative signal.

The RFIC 200 may generate an RF input signal RF_IN by performing frequency up-conversion on the transmission signal TX or generate a receiving signal RX by performing frequency down-conversion on the RF receiving signal RF_R. For example, the RFIC 200 may include a transmit circuit TXC for frequency up-conversion, a receive circuit RXC for frequency down-conversion, and a local oscillator LO.

The transmit circuit TXC may include a first analog baseband filter ABF1, a first mixer MX1, and an amplifier DA. For example, the first analog baseband filter ABF1 may include a low-pass filter.

The first analog baseband filter ABF1 may filter the transmission signal TX received from the processor 810 and provide the filtered transmission signal TX to the first mixer MX1. The first mixer MX1 may perform frequency up-conversion to convert a frequency of the transmission signal TX from a baseband to a high-frequency band based on a frequency signal provided by the local oscillator LO. Through the frequency up-conversion, the transmission signal TX may be provided to the amplifier 210 as the RF input signal RF_IN, and the amplifier 210 may primarily amplify the RF input signal RF_IN and provide the amplified RF input signal to the power amplifier PA.

The power amplifier PA may receive a power supply voltage (for example, a dynamically varying output voltage) from the power modulator 300 and secondarily amplify the power of the RF input signal RF_IN based on the supplied power supply voltage to generate an RF output signal RF_OUT. The power amplifier PA may then provide the generated RF output signal RF_OUT to the duplexer 115.

The receive circuit RXC may include a second analog baseband filter ABF2, a second mixer MX2, and a low-noise amplifier 220. For example, the second analog baseband filter ABF2 may include a low-pass filter.

The low-noise amplifier 220 may amplify the RF receiving signal RF_R received from the duplexer 115 and provide the amplified RF receiving signal RF_R to the second mixer MX2. The second mixer MX2 may perform frequency down-conversion to convert a frequency of the receiving signal RF_R from a high-frequency band to the baseband using a frequency signal provided by the local oscillator LO. Through the frequency down-conversion, the RF receiving signal RF_R may be provided to the second analog baseband filter ABF2 as a receiving signal RX, and the second analog baseband filter ABF2 may filter the receiving signal RX and provide the filtered receiving signal RX to the communication processor 110.

The wireless communication device 1100 according to one or more embodiments may transmit a transmission signal through a plurality of frequency bands using carrier aggregation (CA). To this end, the wireless communication device 1100 may include a plurality of power amplifiers to amplify the power of the plurality of RF input signals RF_IN, respectively corresponding to the plurality of carriers. For simplicity, the description uses an example with a single power amplifier PA.

The power modulator 300 may generate a modulated output voltage having a dynamically varying level based on the analog envelope signal A_ENV and the average power signal D_REF and provide the generated output voltage to the power amplifier PA as a power supply voltage.

For example, the power modulator 300 may receive the average power signal D_REF and the analog envelope signal A_ENV from the communication processor 110. The power modulator 300 may operate in either ET mode or APT mode to generate a dynamically varying output voltage based on the received average power signal D_REF and analog envelope signal A_ENV. In addition, the power modulator 300 may provide the generated output voltage to the power amplifier PA as a power supply voltage.

When a fixed-level power supply voltage is applied to the power amplifier PA, the power efficiency of the power amplifier PA may decrease. Therefore, for efficient power management of the power amplifier PA, the power modulator 300 may modulate an input voltage (for example, power supplied from a battery) based on at least one of the analog envelope signal A_ENV and the average power signal D_REF and provide the modulated voltage to the power amplifier PA as a power supply voltage.

The duplexer 115 may be connected to the antenna 120 to separate transmission and reception frequencies. For example, the duplexer 115 may separate RF output signals RF_OUT, provided from the power amplifier PA, for each frequency band and provide the separated output signals RF_OUT to the corresponding antenna 120. In addition, the duplexer 115 may provide an external signal received from the antenna 120 to the low-noise amplifier 220 of the receive circuit RXC of the RFIC 200. For example, the duplexer 115 may include a front-end module with integrated duplexer (FEMiD).

The wireless communication device 1100 according to one or more embodiments may include a switch structure configured to separate transmission and reception frequencies, instead of the duplexer 115. The wireless communication device 1100 may include a structure including both a duplexer 115 and a switch to separate transmission and reception frequencies. For simplicity, the description uses an example where the wireless communication device 1100 includes a duplexer 115 configured to separate transmission and reception frequencies.

The antenna 120 may transmit a frequency-separated RF output signal RF_OUT, provided by the duplexer 115, to an external entity or provide an RF receiving signal RF_R, received from an external entity, to the duplexer 115. For example, the antenna 120 may include an array antenna, but embodiments are not limited thereto.

The antenna 120 according to one or more embodiments may receive a receiving signal IS used for Bluetooth communication. For example, the receiving signal IS may be referred to as an RF signal having a frequency of approximately 2.4 GHz.

According to one or more embodiments, the receiving signal IS may include a plurality of samples, each having a value that repeats every first number of samples. For example, the receiving signal IS may include a plurality of samples, each having a value that repeats every four samples. A sample may be understood as a unit of the receiving signal IS sampled by the communication processor 110B. Therefore, the receiving signal IS may be understood as including a plurality of samples. For example, a sample may have a length of 500 ns.

For reference, each of the communication processor 110B, the power modulator 300, the RFIC 200, the power amplifier PA, and the duplexer 115 may be individually implemented as an IC, a chip, or a module. The communication processor 110B, the power modulator 300, the RFIC 200, the power amplifier PA, and the duplexer 115 may be mounted together on a printed circuit board (PCB). However, embodiments are not limited thereto. In some embodiments, at least a portion of the communication processor 110B, the power modulator 300, the RFIC 200, the power amplifier PA, and the duplexer 115 may be implemented as a single communication chip.

The wireless communication device 1100 illustrated in FIG. 11 may be included in a wireless communication system using cellular networks such as 5G or LTE, a wireless local area network (WLAN) system, or any other wireless communication system. For reference, the configuration of the wireless communication device 1100 illustrated in FIG. 11 is only an example and embodiments are not limited thereto. The configuration of the wireless communication device 1100 illustrated in FIG. 11 may vary depending on the communication protocol or communication method.

The communication processor 110B according to one or more embodiments may generate a first delay signal DS1 and a second delay signal DS2, each delayed by a time corresponding to a different number of samples, from the receiving signal IS received through the antenna 120.

The communication processor 110B may accumulate the result values of the correlation operation between the first delay signal DS1 and the receiving signal IS to obtain the first cumulative correlation value A1. The communication processor 110B may accumulate the result values of the correlation operation between the second delay signal DS2 and the receiving signal IS to obtain the second cumulative correlation value A2.

The communication processor 110B may compare an absolute value of each of the first cumulative correlation value A1 and the second cumulative correlation value A2 with the first threshold TH1 and the second threshold TH2 to obtain data DATA transmitted through the receiving signal IS.

For example, when the absolute value of the first cumulative correlation value A1 is less than the first threshold TH1 at the time point at which the absolute value of the second cumulative correlation value A2 is greater than or equal to the second threshold TH2, the communication processor 110B may obtain data DATA included in the receiving signal IS based on information that corresponds to the receiving signal IS (for example, a time gap TG or gain).

Accordingly, the communication processor 110B according to one or more embodiments may reduce a frequency of falsely detecting a single-tone signal as an HDT signal, compared to detecting an HDT signal using only a single cumulative correlation value.

As a result, the wireless communication device 1100 according to one or more embodiments may significantly reduce degradation in communication performance caused by falsely detecting a single-tone signal as an HDT signal. For example, the wireless communication device 1100 according to one or more embodiments may improve communication performance.

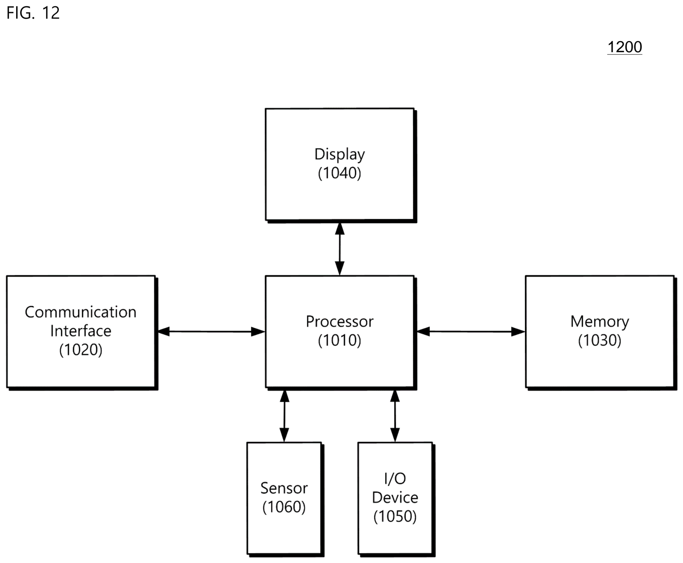

FIG. 12 is a block diagram illustrating an IoT device including an electronic device according to one or more embodiments.

Referring to FIG. 12, Internet of Things (IoT) may refer to a network between things which use wired and/or wireless communication. An IoT device 1200 may have an accessible wired or/and wireless interface and may include devices which communicate with at least one or more other devices through the wired or/and wireless interface to transmit or receive data. An accessible interface of the IoT device 1200 may include a modem communication interface capable of accessing one or more of a local area network (LAN), a wireless local area network (WLAN), such as a wireless fidelity (Wi-Fi), a wireless personal area network (WPAN), such as Bluetooth, a wireless universal serial bus (USB), ZigBee, near field communication (NFC), radio-frequency identification (RFID), power line communication (PLC), or a mobile cellular network, such as 3rd generation (3G), long term evolution (LTE), 4th generation (4G), or 5th generation (5G). The Bluetooth interface may support Bluetooth low energy (BLE).

For example, the IoT device 1200 may include a communication interface 1020 for communicating with an external entity. The communication interface 1020 may be, for example, a modem communication interface configured to access a LAN, a wireless short range communication interface, such as one or more of Bluetooth, Wi-Fi, or ZeeBee, PLC, or a mobile communication network, such as 3G, LTE, 4G, or 5G.

The IoT device 1200 according to one or more embodiments may be understood as an example of the electronic device 100 illustrated in FIG. 1. In one or more embodiments, the IoT device 1200 may include a processor 1010, a communication interface 1020, a memory 1030, a display 1040, an input/output (I/O) device 1050, and a sensor 1060.

The communication interface 1020 may include a transceiver and/or a receiver. The communication interface 1020 illustrated in FIG. 12 may be understood to include the antenna 120 illustrated in FIG. 1.

The IoT device 1200 may transmit and/or receive information from an access point or a gateway through the transceiver and/or receiver. The IoT device 1200 may communicate with a user device or another IoT device to transmit and/or receive control information or data of the IoT device 1200.

The IoT device 1200 may include the processor 1010 performing computation. The processor 1010 illustrated in FIG. 12 may be referred to as having substantially the same configuration as the communication processor 110 illustrated in FIG. 1.

The processor 1010 according to one or more embodiments may generate a first delay signal DS1 and a second delay signal DS2, each delayed by a time corresponding to a different number of samples, from a receiving signal IS received through the communication interface 1020.

The processor 1010 may accumulate result values of the correlation operation between the first delay signal DS1 and the receiving signal IS to obtain a first cumulative correlation value A1. The processor 1010 may accumulate result values of the correlation operation between the second delay signal DS2 and the receiving signal IS to obtain a second cumulative correlation value A2.

The processor 1010 may compare an absolute value of each of the first cumulative correlation value A1 and the second cumulative correlation value A2 with a first threshold TH1 and a second threshold TH2 to obtain data DATA transmitted through the receiving signal IS.

For example, when the absolute value of the first cumulative correlation value A1 is less than the first threshold TH1 at the time point at which the absolute value of the second cumulative correlation value A2 is greater than or equal to the second threshold TH2, the processor 1010 may obtain data DATA included in the receiving signal IS based on information that corresponds to the receiving signal IS (for example, a time gap TG or gain).

Accordingly, the processor 1010 according to one or more embodiments may reduce the frequency of falsely detecting a single-tone signal as an HDT signal, compared to detecting an HDT signal using only a single cumulative correlation value.

As a result, the IoT device 1200 according to one or more embodiments may significantly reduce degradation in communication performance caused by falsely detecting a single-tone signal as an HDT signal. For example, the IoT device 1200 according to one or more embodiments may improve communication performance.

The IoT device 1200 may further include an embedded battery configured to supply internal power or a power supply configured to receive power from an external entity. In addition, the IoT device 1200 may include the display 1040 configured to display an internal state or data. A user may control the IoT device 1200 through a user interface (UI) of the display 1040 in the IoT device 1200. The IoT device 1200 may transmit the internal state and/or the data to an external entity through the transceiver and may receive a control instruction and/or data from the external entity through the receiver.

The memory 1030 may store a control instruction code for controlling the IoT device 1200, control data, or user data. The memory 1030 may include at least one of a volatile memory or a nonvolatile memory. The nonvolatile memory includes at least one of various memories such as a read only memory (ROM), a programmable ROM (PROM), an electrically programmable ROM (EPROM), an electrically erasable and programmable ROM (EEPROM), a flash memory, a phase-change RAM (PRAM), a magnetic RAM (MRAM), a resistive RAM (ReRAM), and/or a ferroelectric RAM (FRAM). The volatile memory may include at least one of various memories such as a dynamic RAM (DRAM), a static RAM (SRAM), or a synchronous DRAM (SDRAM).

The IoT device 1200 may further include a storage device. The storage device may include at least one of nonvolatile media such as a hard disk drive (HDD), a solid state drive (SSD), an embedded multimedia card (eMMC), or a universal flash storage (UFS). The storage device may store user information provided through the input/output (I/O) device 1050 and a plurality of pieces of sensing information collected through the sensor 10500.

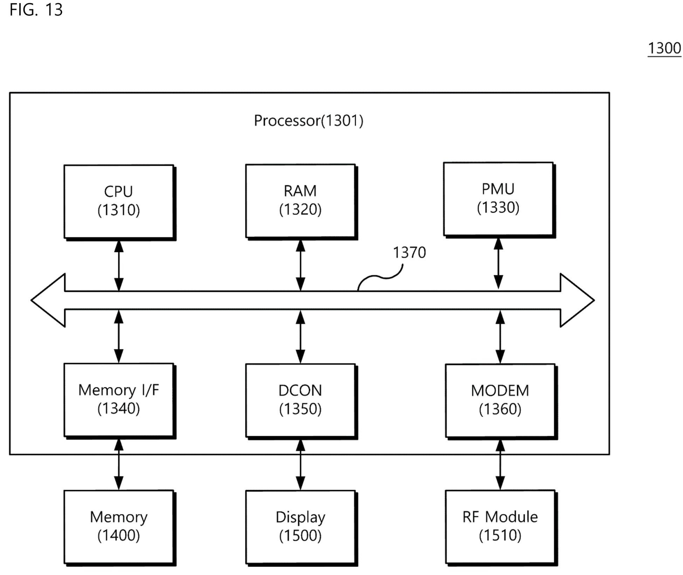

FIG. 13 is a block diagram illustrating a mobile terminal to which an electronic device according to one or more embodiments is applied.

Referring to FIG. 13, a mobile terminal 1300 may include a processor 1301, a memory 1400, a display 1500, and a radio-frequency (RF) module 1510. In some embodiments, the mobile terminal 1300 may further include various components such as a lens, a sensor, or an audio module.

The processor 1301 may be implemented as a system-on-chip (SoC) and may include a central processing unit (CPU) 1310, a random access memory (RAM) 1320, a power management unit (PMU) 1330, a memory interface (IF) 1340, a display controller (DCON) 1350, a modem 1360, and a bus 1370. The processor 1301 may further include various other intellectual properties (IPs). The processor 1301 may be referred to as a ModAP due to the integration of modem chip functionality, but embodiments are not limited thereto.

The CPU 1310 may control the overall operation of the processor 1301 and the mobile terminal 1300. The CPU 1310 may control the operation of each component of the processor 1301. The CPU 1310 may be implemented as a multicore processor, which is a single computing component including two or more independent cores.

The RAM 1320 may temporarily store programs, data, or instructions. For example, programs and/or data stored in the memory 1400 may be temporarily stored in the RAM 1320 under the control of the CPU 1310 or based on booting code. The RAM 1320 may be implemented as a DRAM or an SRAM.

The PMU 1330 may manage the power of each component of the processor 1301. The PMU 1330 may also determine the operational status of each component of the processor 1301 and control the operation thereof.

The memory interface 1340 may control the overall operation of the memory 1400 and manage data exchange between each component of the processor 1301 and the memory 1400. The memory interface 1340 may write data into the memory 1400 or read data from the memory 1400 in response to a request from the CPU 1310.

The display controller (DCON) 1350 may transmit image data to be displayed on the display 1500. The display 1500 may be implemented as a flat panel display, such as a liquid crystal display (LCD) or an organic light emitting diode (OLED) display, or a flexible display.

The modem 1360 may modulate data to be transmitted for wireless communication to conform to a wireless environment and recover received data. The modem 1360 may perform digital communication with the RF module 1510.

The modem 1360 illustrated in FIG. 13 may be referred to as an example of the communication processor 110 illustrated in FIG. 1.

The RF module 1510 may convert a high-frequency signal, received through the antenna 120, into a low-frequency signal and transmit the low-frequency signal to the modem 1360. The RF module 1510 may convert a low-frequency signal, received from the modem 1360, into a high-frequency signal and transmit the high-frequency signal to the outside of the mobile terminal 1300 through the antenna. The RF module 1510 may amplify or filter signals.

The RF module 1510 illustrated in FIG. 13 may include the antenna 120 illustrated in FIG. 1.

The processor 1301 according to one or more embodiments may generate a first delay signal DS1 and a second delay signal DS2, each delayed by a time corresponding to a different number of samples, from the receiving signal IS received through the RF module 1510.

The processor 1301 may accumulate result values of the correlation operation between the first delay signal DS1 and the receiving signal IS to obtain a first cumulative correlation value A1. The processor 1301 may accumulate result values of the correlation operation between the second delay signal DS2 and the receiving signal IS to obtain a second cumulative correlation value A2.

The processor 1301 may compare an absolute value of each of the first cumulative correlation value A1 and the second cumulative correlation value A2 with the first threshold TH1 and the second threshold TH2 to obtain data DATA transmitted through the receiving signal IS.

For example, when the absolute value of the first cumulative correlation value A1 is less than the first threshold TH1 at the time point at which the absolute value of the second cumulative correlation value A2 is greater than or equal to the second threshold TH2, the processor 1301 may obtain data DATA included in the receiving signal IS based on information that corresponds to the receiving signal IS (for example, a time gap TG or gain).

Accordingly, the processor 1301 according to one or more embodiments may reduce a frequency of falsely detecting a single-tone signal as an HDT signal, compared to detecting an HDT signal using only a single cumulative correlation value.

As a result, the mobile terminal 1300 according to one or more embodiments may significantly reduce degradation in communication performance caused by falsely detecting a single-tone signal as an HDT signal. For example, the mobile terminal 1300 according to one or more embodiments may improve communication performance.

As described above, the communication processor 110 according to one or more embodiments may generate a first delay signal DS1 and a second delay signal DS2, each delayed by a time corresponding to a different number of samples, from the receiving signal IS received through the antenna 120.

The communication processor 110 may accumulate result values of the correlation operation between each of the first delay signal DS1 and the second delay signal DS2 and the receiving signal IS to obtain the first cumulative correlation value A1 and the second cumulative correlation value A2.

The communication processor 110 may compare an absolute value of each of the first cumulative correlation value A1 and the second cumulative correlation value A2 with the first threshold TH1 and the second threshold TH2 to obtain data DATA transmitted through the receiving signal IS.

For example, when the absolute value of the first cumulative correlation value A1 is less than the first threshold TH1 at the time point at which the absolute value of the second cumulative correlation value A2 is greater than or equal to the second threshold TH2, the communication processor 110 may obtain data DATA included in the receiving signal IS based on information that corresponds to the receiving signal IS (for example, a time gap TG or gain).

Accordingly, the communication processor 110 according to the present disclosure may reduce a frequency of falsely detecting a single-tone signal as an HDT signal, compared to detecting an HDT signal using only a single cumulative correlation value.

As a result, the electronic device 100 according to one or more embodiments may significantly reduce degradation in communication performance caused by falsely detecting a single-tone signal as an HDT signal. For example, the electronic device 100 according to one or more embodiments may improve communication performance.

As set forth above, according to embodiments, an electronic device may improve communication performance.

While various embodiments have been shown and described above with reference to the drawings, it will be apparent to those skilled in the art that modifications and variations could be made without departing from the scope of the present disclosure as defined by the appended claims.

Embodiments are set out in the following clauses:
Clause 1: An electronic device comprising:
   an antenna configured to receive a receiving signal comprising a plurality of samples, each having a value repeating every first number of samples; and
   a communication processor that is electrically connected to the antenna and that is configured to:
      obtain a first cumulative correlation value by accumulating results of correlation operations between a first delay signal and corresponding samples in the receiving signal, the first delay signal being obtained by delaying the receiving signal by a first delay time;
      obtain a second cumulative correlation value by accumulating results of correlation operations between a second delay signal and corresponding samples in the receiving signal, the second delay signal being obtained by delaying the receiving signal by a second delay time that is different from the first delay time; and
      obtain data included in the receiving signal when an absolute value of the second cumulative correlation value is greater than or equal to a second threshold and an absolute value of the first cumulative correlation value is less than a first threshold.
Clause 2: The electronic device of clause 1, wherein the communication processor is configured to:
   determine a data receiving time point at which the data in the receiving signal starts, based on a time point at which the absolute value of the second cumulative correlation value has a maximum value; and
   obtain the data of the receiving signal based on a packet received starting from the data receiving time point.
Clause 3: The electronic device of clause 2, wherein:
   the communication processor is further configured to obtain the data by applying a first gain to a value of the packet received starting from the data receiving time point in the receiving signal, and
   the first gain corresponds to the receiving signal.
Clause 4: The electronic device of clause 2 or 3, wherein:
   the communication processor is configured to determine the data receiving time point by adding a time gap to the time point at which the absolute value of the second cumulative correlation value has the maximum value, and
   the time gap corresponds to the receiving signal.
Clause 5: The electronic device of any preceding clause, wherein the communication processor further comprises:
   a first correlation circuit configured to perform a multiplication operation on samples of the receiving signal and conjugate complex numbers of corresponding samples of the first delay signal;
   a first accumulation circuit configured to accumulate results of the multiplication operation to obtain the first cumulative correlation value; and
   a first absolute value circuit configured to obtain the absolute value of the first cumulative correlation value from the first cumulative correlation value, and output the absolute value of the first cumulative correlation value.
Clause 6: The electronic device of any preceding clause, wherein:
   the first threshold and the second threshold have a same value.
Clause 7: The electronic device of clause 5, wherein the communication processor further comprises:
   a second correlation circuit configured to perform a multiplication operation on samples of the receiving signal and conjugate complex numbers of samples corresponding to the samples of the second delay signal;
   a second accumulation circuit configured to accumulate results of the multiplication operation to obtain the second cumulative correlation value; and
   a second absolute value circuit configured to obtain the absolute value of the second cumulative correlation value from the second cumulative correlation value, and output the absolute value of the second cumulative correlation value.
Clause 8: The electronic device of any preceding clause, wherein:
   the first delay time corresponds to a length of samples equal to half of the first number; and
   the second delay time corresponds to a length of samples equal to the first number.
Clause 9: The electronic device of any of clauses 2 to 4, wherein the communication processor comprises:
   a comparison circuit configured to output a detection request when the absolute value of the first cumulative correlation value is less than the first threshold; and
   a detection circuit configured to determine, in response to the detection request, the time point at which the absolute value of the second cumulative correlation value has the maximum value.
Clause 10: The electronic device of any preceding clause, wherein the communication processor further comprises:
   a buffer circuit comprising a plurality of buffers, each configured to delay the receiving signal by a time corresponding to a length of a single sample, among the plurality of samples.
Clause 11: A method comprising:
   receiving a receiving signal comprising a plurality of samples through an antenna;
   obtaining, by a communication processor, a first cumulative correlation value by accumulating results of autocorrelation operations between a first delay signal and corresponding samples of the receiving signal, the first delay signal being obtained by delaying the receiving signal by a first delay time;
   obtaining, by the communication processor, a second cumulative correlation value by accumulating results of autocorrelation operations between a second delay signal and corresponding samples of the receiving signal, the second delay signal being obtained by delaying the receiving signal by a second delay time that is different from the first delay time; and
   obtaining, by the communication processor, data included in the receiving signal when an absolute value of the second cumulative correlation value is greater than or equal to a second threshold and when an absolute value of the first cumulative correlation value is less than a first threshold.
Clause 12: The method of clause 11, wherein the obtaining of the first cumulative correlation value comprises:
   performing a multiplication operation on samples of the receiving signal and conjugate complex numbers of samples corresponding to the samples of the first delay signal; and
   accumulating results of the multiplication operation to obtain the first cumulative correlation value.
Clause 13: The method of clause 11 or 12, wherein the obtaining of the data of the receiving signal comprises:
   determining a data receiving time point at which the data in the receiving signal starts by adding a time gap to a time point at which the absolute value of the second cumulative correlation value has a maximum value; and
   obtaining the data from a signal, received starting from the data receiving time point, in the receiving signal, and
   wherein the time gap corresponds to the receiving signal.
Clause 14: The method of clause 13, wherein:
   the plurality of samples in the receiving signal has values repeating every first number of samples;
   the first delay time corresponds to a length of samples equal to half of the first number; and
   the second delay time corresponds to a length of samples equal to the first number.
Clause 15: The method of any of clauses 11 to 14, wherein:
   the first threshold and the second threshold have a same value.

## Claims

1. An electronic device (100) comprising:
an antenna (120) configured to receive a receiving signal (IS) comprising a plurality of samples, each having a value repeating every first number of samples; and
a communication processor (110) that is electrically connected to the antenna (120) and that is configured to:
obtain (S20) a first cumulative correlation value (A1) by accumulating results of correlation operations between a first delay signal (DS1) and corresponding samples in the receiving signal (IS), the first delay signal (DS1) being obtained by delaying the receiving signal (IS) by a first delay time (t1);
obtain (S30) a second cumulative correlation value (A2) by accumulating results of correlation operations between a second delay signal (DS2) and corresponding samples in the receiving signal (IS), the second delay signal (DS2) being obtained by delaying the receiving signal (IS) by a second delay time (t2) that is different from the first delay time (t1); and
obtain (S50) data included in the receiving signal (IS) when an absolute value of the second cumulative correlation value (A2) is greater than or equal to a second threshold (TH2) and an absolute value of the first cumulative correlation value (A1) is less than a first threshold (TH1).

2. The electronic device (100) of claim 1, wherein the communication processor (110) is configured to:
determine a data receiving time point at which the data in the receiving signal (IS) starts, based on a time point (TP2) at which the absolute value of the second cumulative correlation value (A2) has a maximum value; and
obtain the data of the receiving signal (IS) based on a packet received starting from the data receiving time point.

3. The electronic device (100) of claim 2, wherein:
the communication processor (110) is further configured to obtain the data by applying a first gain to a value of the packet received starting from the data receiving time point in the receiving signal (IS), and
the first gain corresponds to the receiving signal (IS).

4. The electronic device (100) of claim 2 or 3, wherein:
the communication processor (110) is configured to determine the data receiving time point by adding a time gap (TG) to the time point (TP2) at which the absolute value of the second cumulative correlation value (A2) has the maximum value.

5. The electronic device (100A) of any preceding claim, wherein the communication processor (110A) further comprises:
a first correlation circuit (711) configured to perform a multiplication operation on samples of the receiving signal (IS) and conjugate complex numbers of corresponding samples of the first delay signal (DS1);
a first accumulation circuit (712) configured to accumulate results of the multiplication operation to obtain the first cumulative correlation value (A1); and
a first absolute value circuit (713) configured to obtain the absolute value of the first cumulative correlation value (A1) from the first cumulative correlation value (A1), and output the absolute value of the first cumulative correlation value (A1).

6. The electronic device (100A) of claim 5, wherein the communication processor (110A) further comprises:
a second correlation circuit (721) configured to perform a multiplication operation on samples of the receiving signal (IS) and conjugate complex numbers of samples corresponding to the samples of the second delay signal (DS2);
a second accumulation circuit (722) configured to accumulate results of the multiplication operation to obtain the second cumulative correlation value (A2); and
a second absolute value circuit (723) configured to obtain the absolute value of the second cumulative correlation value (A2) from the second cumulative correlation value (A2), and output the absolute value of the second cumulative correlation value (A2).

7. The electronic device (100) of any preceding claim, wherein:
the first threshold (TH1) and the second threshold (TH2) have a same value.

8. The electronic device (100) of any preceding claim, wherein:
the first delay time (t1) corresponds to a length of samples equal to half of the first number; and
the second delay time (t2) corresponds to a length of samples equal to the first number.

9. The electronic device (100) of any of claims 2 to 4, wherein the communication processor (110) comprises:
a comparison circuit (731) configured to output a detection request (DR) when the absolute value of the first cumulative correlation value (A1) is less than the first threshold (TH1); and
a detection circuit (732) configured to determine, in response to the detection request (DR), the time point (TP2) at which the absolute value of the second cumulative correlation value (A2) has the maximum value (MV).

10. The electronic device (100A) of any preceding claim, wherein the communication processor (110A) further comprises:
a buffer circuit (701) comprising a plurality of buffers, each configured to delay the receiving signal (IS) by a time corresponding to a length of a single sample, among the plurality of samples.

11. A method comprising:
receiving (S10) a receiving signal (IS) comprising a plurality of samples through an antenna (120);
obtaining (S20), by a communication processor (110), a first cumulative correlation value (A1) by accumulating results of autocorrelation operations between a first delay signal (DS1) and corresponding samples of the receiving signal (IS), the first delay signal (DS1) being obtained by delaying the receiving signal (IS) by a first delay time (t1);
obtaining (S30), by the communication processor (110), a second cumulative correlation value (A2) by accumulating results of autocorrelation operations between a second delay signal (DS2) and corresponding samples of the receiving signal (IS), the second delay signal being (DS2) obtained by delaying the receiving signal (IS) by a second delay time (t2) that is different from the first delay time (t1); and
obtaining (S50), by the communication processor (110), data included in the receiving signal (IS) when an absolute value of the second cumulative correlation value (A2) is greater than or equal to a second threshold (TH2) and when an absolute value of the first cumulative correlation (A1) value is less than a first threshold (TH1).

12. The method of claim 11, wherein the obtaining (S20) of the first cumulative correlation value (A1) comprises:
performing (S21) a multiplication operation on samples of the receiving signal (IS) and conjugate complex numbers of samples corresponding to the samples of the first delay signal (DS1); and
accumulating (S23) results of the multiplication operation to obtain the first cumulative correlation value (A1).

13. The method of claim 11 or 12, wherein the obtaining (S10) of the data of the receiving signal (IS) comprises:
determining a data receiving time point at which the data in the receiving signal (IS) starts by adding a time gap (TG) to a time point (TP2) at which the absolute value of the second cumulative correlation value (A2) has a maximum value; and
obtaining the data from a signal, received starting from the data receiving time point, in the receiving signal (IS).

14. The method of claim 13, wherein:
the plurality of samples in the receiving signal (IS) has values repeating every first number of samples;
the first delay time (t1) corresponds to a length of samples equal to half of the first number; and
the second delay time (t2) corresponds to a length of samples equal to the first number.

15. The method of any of claims 11 to 14, wherein:
the first threshold (TH1) and the second threshold (TH2) have a same value.
